# FASCICULE DE BREVET EUROPEEN

(11) **EP 2 683 917 B1**
(45) Date de publication et mention de la délivrance du brevet: **07.10.2020**
(21) Numéro de dépôt: 12712326.3
(22) Date de dépôt: 06.03.2012
(51) Int. Cl.: F01D 11/24, F01D 25/24

(54) **CARTER DE TURBINE COMPORTANT DES MOYENS DE FIXATION DE SECTEURS D'ANNEAU, TURBINE ET TURBOMACHINE ASSOCIÉES**
TURBINENGEHÄUSE MIT VORRICHTUNG ZUR BEFESTIGUNG VON RINGABSCHNITTEN
TURBINE CASING COMPRISING A MEANS FOR ATTACHING RING SECTORS

(30) Priorité: 07.03.2011 FR 1151802
(43) Date de publication de la demande: 15.01.2014
(73) Titulaire: Safran Aircraft Engines, 75015 Paris (FR)
(72) Inventeur: BONNEAU, Damien, F-77550 Moissy-Cramayel Cedex (FR); CORDIER, Jean-Christophe, Marc, F-77550 Moissy-Cramayel Cedex (FR); GARIN, Fabrice, Marcel, Noël, F-77550 Moissy-Cramayel Cedex (FR)
(74) Mandataire: Ahner, Philippe
(86) Numéro de dépôt international: PCT/FR2012/050455
(87) Numéro de publication internationale: WO 2012/120228

(56) Documents cités:
- EP-A1- 1 903 186
- EP-A1- 2 053 200
- FR-A1- 2 280 791

## Description

### DOMAINE TECHNIQUE

L'invention propose un carter de turbomachine comportant des moyens de fixation de secteurs d'anneau.

L'invention propose plus particulièrement un carter pour lequel les secteurs d'anneau sont fixés de manière à limiter les fuites d'air de refroidissement des secteurs d'anneau.

### ÉTAT DE LA TECHNIQUE ANTÉRIEURE

Dans une turbomachine d'aéronef, la position radiale du sommet des aubes de la turbine haute pression varie selon les conditions de fonctionnement de la turbomachine, notamment du fait que les aubes se dilatent plus ou moins car elles sont chauffées par les gaz de combustion et aussi du fait que la vitesse de rotation de la turbomachine provoque un allongement des aubes plus ou moins important par action centrifuge.

Les aubes de la turbine haute pression sont agencées dans une veine de la turbine, qui est délimitée par un anneau externe formé d'une pluralité de secteurs d'anneau adjacents. Les sommets des aubes évoluent à proximité de la face interne de chaque secteur d'anneau.

Puisque la position radiale du sommet de chaque aube varie en fonction des conditions de fonctionnement de la turbomachine, le jeu radial entre le sommet de chaque aube et les secteurs d'anneau varie lui aussi.

Si ce jeu est trop important, un tourbillonnement des gaz se produit au niveau du sommet de chaque aube, ce qui nuit à l'efficacité de la turbomachine. Si le jeu est trop faible, le sommet d'une aube peut venir en contact avec un secteur d'anneau et endommager celui-ci.

Chaque secteur d'anneau est porté par un carter externe de la turbomachine qui est réalisé de manière à contrôler l'étendue de ce jeu radial.

Pour cela, le carter comporte des bosses sur lesquelles est projeté un flux d'air plus froid que la température du carter pour refroidir le carter et provoquer une contraction radiale du carter. Cette contraction du carter amène une diminution du diamètre du carter et de l'anneau, réduisant ainsi le jeu radial entre les sommets des aubes et les secteurs d'anneau.

Le carter est généralement appelé "carter de pilotage".

La liaison entre les secteurs d'anneau et le carter est réalisée par l'intermédiaire d'entretoises radiales fixées au carter d'une part et aux secteurs d'anneau d'autre part.

Un tel mode de fixation des secteurs d'anneau est décrit par exemple dans le document EP 1.903.186.

Chaque entretoise s'étend sur un secteur angulaire et chacune est fixée à deux secteurs d'anneau associés.

Les entretoises étant fixées au carter de pilotage, elles sont donc mobiles radialement pour permettre le déplacement radial des secteurs d'anneau. Aussi, un jeu de fonctionnement est présent entre deux entretoises adjacentes.

Cependant, à cause du jeu entre les entretoises, de l'air, qui est utilisé pour le refroidissement des secteurs d'anneau, peut s'échapper au travers de ce jeu pour atteindre la veine de la turbine haute pression, réduisant alors l'efficacité de la turbine haute pression et de la turbomachine.

De plus, le montage des entretoises sur le carter de pilotage et relativement complexe et la masse des entretoises réduit la performance générale de la turbomachine.

Le document EP-A-2.053.200 décrit un carter de turbomachine comportant des moyens de fixation de secteurs d'anneau.

Ce carter comporte une paroi annulaire et des moyens de refroidissement du carter.

Ces moyens de refroidissement sont réalisés de manière qu'un flux d'air de refroidissement circule en direction de la paroi annulaire puis est redirigé vers les secteurs d'anneau à refroidir.

Cependant, rien dans ce document ne mentionne ni ne suggère que les moyens de refroidissement sont réalisés de manière que le flux d'air de refroidissement est piloté de manière dynamique, pour modifier à chaque instant la dilatation de la paroi annulaire et par conséquent pour modifier la position radiale des secteurs d'anneau.

FR 2 280 791 A1 décrit le refroidissement ou le chauffage d'un carter de turbine d'aéronef, par l'injection d'un flux d'air froid ou d'air chaud dans un volume. Ce volume est délimité axialement par une paroi radiale dans laquelle des orifices de passage d'air sont formés.

L'invention a pour but de proposer un carter de turbomachine qui permet de résoudre les problèmes précédents.

### EXPOSÉ DE L'INVENTION

L'invention propose un carter de turbine d'aéronef selon la revendication 1.

Un tel mode de réalisation d'au moins la patte amont permet de supprimer des moyens de fixation de la patte amont sur le carter, réduisant le poids du carter et limitant aussi les risques de fuites.

De préférence, les deux pattes radiales sont réalisées d'une seule pièce avec le carter et sont reliées directement à chaque secteur d'anneau.

Selon l'invention, au moins la patte radiale amont comporte des orifices de passage d'air de ventilation des secteurs d'anneau.

De préférence, chaque patte radiale est en forme d'une couronne s'étendant radialement vers l'intérieur, dans un plan radial par rapport à l'axe principal de la turbine, à partir d'une face annulaire interne de la paroi annulaire du carter.

Selon l'invention, le carter comporte un conduit de guidage d'un flux d'air le long d'une face annulaire interne de la paroi annulaire du carter.

Ledit conduit de guidage débouche en direction des secteurs d'anneau.

Selon l'invention, les orifices de la patte radiale amont débouchent dans ledit conduit de guidage.

De préférence, le conduit est délimité radialement par la paroi annulaire et par une tôle annulaire de guidage qui est agencée radialement entre la paroi annulaire et les secteurs d'anneau.

L'invention propose aussi une turbine de turbomachine d'aéronef caractérisé en ce qu'elle comporte un ensemble statorique composé d'un carter selon l'invention et composé d'une pluralité de secteurs d'anneau qui sont fixés directement au moins à la patte radiale amont du carter.

L'invention propose aussi une turbomachine d'aéronef comportant une turbine selon l'invention et/ou un carter selon l'invention.

### BRÈVE DESCRIPTION DES DESSINS

D'autres caractéristiques et avantages de l'invention apparaîtront à la lecture de la description détaillée qui suit pour la compréhension de laquelle on se reportera aux figures annexées parmi lesquelles :
- la figure 1 est une vue en coupe axiale partielle d'une turbomachine comportant un carter réalisé conformément à l'invention ;
- la figure 2 est un détail à plus grande échelle du carter de pilotage représenté à la figure 1, dans lequel les deux pattes radiales sont réalisées d'une seule pièce avec le carter ;
- la figure 3 est une vue similaire à celle d la figure 2, montrant une variante de réalisation de l'invention comportant un conduit annulaire de guidage d'un flux de refroidissement de la paroi annulaire du carter ;
- la figure 4 est un détail en perspective de la variante représentée à la figure 3, montrant les deux tronçons de la tôle annulaire délimitant le conduit annulaire.

### EXPOSÉ DÉTAILLÉ DE MODES DE RÉALISATION PARTICULIERS

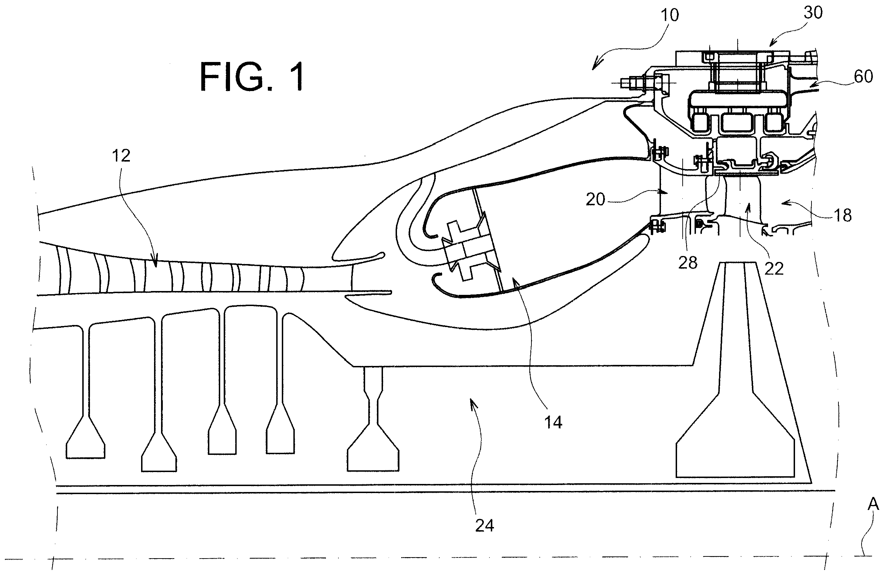

On a représenté partiellement à la figure 1 une turbomachine 10 d'axe principal A, qui comporte successivement, dans le sens d'écoulement du flux de gaz, c'est-à-dire ici, de gauche à droite, un compresseur haute pression 12, une chambre de combustion 14 et une turbine haute pression.

La turbine haute pression comporte une conduite annulaire 18, communément appelée "veine", au travers de laquelle les gaz provenant de la chambre de combustion 14 circulent de l'amont vers l'aval, des distributeurs 20 fixes et des aubes 22 mobiles qui sont agencées dans la veine 18.

Les aubes 22 sont portées par un corps haute pression 24 de la turbine haute pression, qui est mobile en rotation autour de l'axe principal A de la turbomachine 10, et relie la turbine haute pression au compresseur haute pression 12.

La turbine haute pression, comporte un ensemble statorique radialement externe qui délimite en partie la veine et qui comporte une pluralité de secteurs d'anneau 28 adjacents qui délimitent radialement la veine 18.

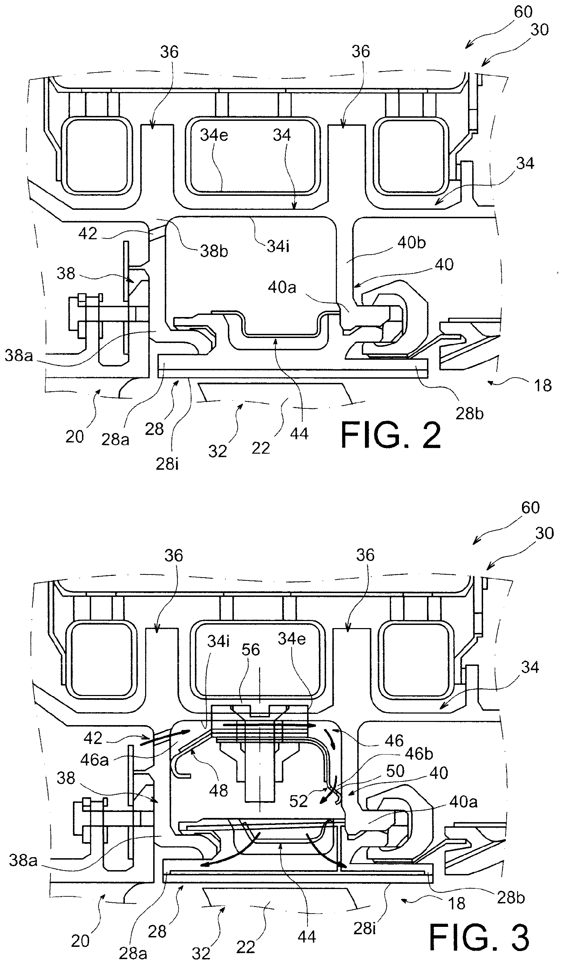

L'ensemble statorique comporte aussi un carter externe de la turbine haute pression qui porte les secteurs d'anneau 28, comme on peut le voir plus en détails à la figure 2.

Le carter 30 comporte une paroi annulaire 34 située radialement à distance des secteurs d'anneau 28 sur la face interne 34i de laquelle les secteurs d'anneau 28 sont montés.

Le carter 30 est aussi réalisé de manière à permettre un réglage dynamique de la position radiale des secteurs d'anneau 28 par rapport à l'axe principal A de la turbomachine 10, pour optimiser le jeu radial entre le sommet 32 de chaque aube 22 et la face interne 28i en vis-à-vis de chaque secteur d'anneau 28.

Ce réglage dynamique s'effectue selon les conditions de fonctionnement de la turbomachine 10, il consiste principalement à injecter une quantité d'air en direction d'une partie du carter 30, en vue de refroidir en partie le carter 30 et réduire sa dilatation.

Pour cela, une quantité d'air est prélevée dans le compresseur haute pression 12 et est amenée vers le carter 30 par des conduits pour être injectés sur la face externe 34e de la paroi annulaire 34.

L'air prélevé est injecté dans un boîtier de pilotage 60 du carter 30, qui est solidaire de la paroi annulaire 34.

Le boîtier de pilotage 60 comporte des bosses 36 qui sont réalisées sur la face externe 34e de la paroi annulaire 34. Les bosses 36 sont formées pour favoriser les échanges de chaleur avec l'air injecté.

Le boîtier de pilotage 60 est multi-perforé, c'est-à-dire qu'il comporte une pluralité de perforations traversées par l'air pour permettre un refroidissement des bosses 36 par impact avec l'air.

En fonction de la quantité d'air qui est injectée sur les bosses 36, le carter 30 est refroidi de manière plus ou moins importante et l'amplitude de sa dilatation est ainsi maîtrisée.

Les secteurs d'anneau 28 sont montés sur la paroi 34 du carter 30, ils se déplacent donc radialement de manière solidaire à la dilatation ou la contraction du carter 30.

Ainsi, l'air projeté sur les bosses 36 permet de modifier la position radiale des secteurs d'anneau 28 par rapport à l'axe principal A de la turbomachine 10.

Le montage de chaque secteur d'anneau 28 sur le carter de pilotage 30 est réalisé par l'intermédiaire de deux pattes radiales 38, 40 qui s'étendent radialement depuis la paroi annulaire 34 du carter de pilotage 30 jusqu'au secteur d'anneau 28.

Une première patte radiale 38 amont est située au niveau de l'extrémité amont 28a de chaque secteur d'anneau 28, selon le sens de l'écoulement du flux de gaz et une deuxième patte radiale 40 aval est située au niveau de l'extrémité aval 28b du secteur d'anneau 28.

L'extrémité radiale interne 38a, 40a de chaque patte radiale 38, 40 est fixée à l'extrémité associée 28a, 28b du secteur d'anneau 28, par des moyens de fixation conventionnels.

L'extrémité radiale externe 38b, 40b de chaque patte radiale 38, 40 est fixée à la paroi annulaire 34 du carter 30.

Conformément à l'invention, au moins la patte radiale amont 38 est réalisée d'une seule pièce avec la paroi annulaire 34 du carter 30, et selon un mode de réalisation préféré représenté aux figures, les deux pattes radiales 38, 40 sont réalisées d'une seule pièce avec la paroi annulaire 34 du carter 30.

Un tel mode de réalisation des pattes radiales 38, 40 permet de simplifier localement la structure de la turbomachine 10, en réduisant le nombre de pièces. De plus, cela permet de limiter le poids de l'ensemble, notamment par la suppression des moyens de fixation des pattes radiales 38, 40 à la paroi annulaire 34 du carter 30.

En outre, les pattes radiales 38, 40 sont fixes par rapport à la paroi annulaire 34, ce qui élimine les jeux de fonctionnement et donc les éventuelles fuites d'un flux d'air de refroidissement des secteurs d'anneau 28.

Chaque patte radiale 38, 40 consiste globalement en une couronne plane qui s'étend dans un plan radial par rapport à l'axe principal A de la turbomachine 10.

La patte radiale amont 38 comporte en outre une pluralité d'orifices 42 qui sont répartis angulairement et de manière homogène autour de l'axe principal A de la turbomachine 10.

Ces orifices 42 sont réalisés de manière à permettre une circulation d'air en direction des secteurs d'anneau 28, en vue de leur refroidissement. En effet, les secteurs d'anneau 28 sont en contact direct avec les gaz issus de la chambre de combustion, dont la température est importante. Ce refroidissement des anneaux 28 permet de leur conférer une bonne durée de vie.

Chaque secteur d'anneau 28 comporte des orifices internes (non représentés) et porte une tôle 44 en forme de U pour le cheminement de l'air de refroidissement provenant des orifices 42.

Selon un autre aspect du carter de pilotage 30, chaque patte radiale 38, 40 est positionnée axialement au niveau d'une bosse de pilotage 36.

Ici, le carter 30 comporte deux bosses de pilotage 36, qui sont décalées axialement l'une par rapport à l'autre.

Ainsi, la patte radiale amont 38 est située axialement au droit de la bosse de pilotage 36 située en amont, et la patte radiale aval 40 est située axialement au droit de la bosse de pilotage 36 située en aval.

Il sera compris que l'invention n'est pas limitée à ce mode de réalisation dans lequel le carter 30 comporte deux bosses 36 et qu'elle concerne aussi les modes de réalisation dans lesquels le nombre de bosses est différent. La position des pattes radiales 38, 40 est alors adaptée pour que chaque patte radiale 38, 40 soit située au niveau d'une bosse de pilotage 36.

Selon le mode de réalisation représenté à la figure 2, chaque secteur d'anneau 28 fait directement face à la paroi annulaire 34 du carter 30.

Comme décrit précédemment, les secteurs d'anneau 28 sont chauffés à une température élevée par les gaz circulant dans la veine 18.

Ainsi, les secteurs d'anneau 28 peuvent chauffer la paroi annulaire 34 du carter 30 par rayonnement.

Cet échauffement de la paroi annulaire 34 limite l'efficacité de l'air de refroidissement projeté sur les bosses de pilotage 36.

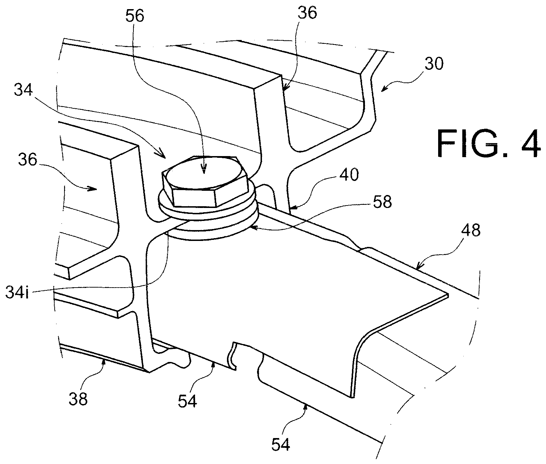

C'est pourquoi, selon un autre aspect de l'invention représenté aux figures 3 et 4, le carter 30 comporte un conduit annulaire 46 de guidage d'un flux d'air le long de la face interne 34i de la paroi annulaire 34.

En circulant le long de la paroi annulaire 34, le flux d'air refroidit la paroi annulaire 34 du carter 30. Aussi, le flux d'air forme un barrage au rayonnement thermique provenant des secteurs d'anneau 28.

Selon une variante de réalisation, le flux d'air qui traverse le conduit annulaire 46 est aussi utilisé pour le refroidissement des secteurs d'anneau 28.

A cet effet, l'extrémité amont 46a du conduit annulaire 46 est située au niveau de la patte radiale amont 38 et les orifices 42 débouchent dans le conduit annulaire 46. Aussi, l'extrémité aval 46b du conduit annulaire 46 est située au niveau de la patte radiale aval 40 et elle est réalisée de manière à déboucher en direction des secteurs d'anneau 28.

Par conséquent, le flux d'air circule globalement de l'amont vers l'aval dans le conduit annulaire 46, en refroidissant la paroi annulaire 34 du carter 30 puis il est redirigé radialement vers les secteurs d'anneau 28 pour leur refroidissement, à partir de l'extrémité aval du conduit annulaire 46.

Selon le mode de réalisation représenté aux figures 3 et 4, le conduit annulaire 46 est délimité radialement par la paroi annulaire 34 du carter 30 et par une tôle annulaire 48 qui est agencée radialement entre la paroi annulaire 34 et les secteurs d'anneau 28.

Pour limiter les fuites d'air, la tôle annulaire 48 est réalisée de manière que ses extrémités axiales sont en appui contre les faces en vis-à-vis des pattes radiales 38, 40. De préférence, cet appui est favorisé par une déformation élastique de la tôle annulaire 48, qui est comprimée axialement entre les deux pattes radiales 38, 40.

A cet effet, la tôle annulaire 48 est de forme convexe et bombée vers l'extérieur, de sorte que les bords d'extrémité axiale amont et aval de la tôle annulaire sont au moins en partie orientées radialement vers l'axe principal A de la turbomachine 10.

Le bord d'extrémité aval 50 de la tôle annulaire 48 comporte des orifices de sortie 52 qui sont orientés globalement vers la tôle en U 44 portée par chaque secteur d'anneau 28 et par lesquels le flux d'air qui sort du conduit annulaire 46 est redirigé en direction des secteurs d'anneau 28.

Pour permettre son montage entre les deux pattes radiales 38, 40, comme on peut le voir à la figure 4, la tôle annulaire 48 est réalisée en plusieurs tronçons 54 s'étendant chacun sur un secteur angulaire.

Par exemple, la tôle annulaire est réalisée en trois tronçons s'étendant chacun sur un secteur angulaire d'environ 120 degrés.

La liaison entre deux tronçons 54 adjacents est réalisée de manière à permettre un déplacement relatif des tronçons l'un par rapport à l'autre, selon une direction perpendiculaire à un plan radial.

Ici, la liaison entre les extrémités associées de deux tronçons 54 adjacents est du type télescopique, c'est à dire que l'extrémité d'un tronçon est reçue dans l'extrémité de l'autre tronçon, et est apte à coulisser selon la direction perpendiculaire au plan radial.

Ce déplacement relatif des tronçons 54 l'un par rapport à l'autre permet une variation du diamètre de la tôle annulaire 48 lors du pilotage du jeu entre les secteurs d'anneau 28 et les sommets des aubes 22, évitant ainsi que des contraintes mécaniques internes à la tôle annulaire 48 ou au carter de pilotage 30 ne soient produites.

La tôle annulaire 48 est ici fixée au carter 30 par l'intermédiaire de vis radiales 56 qui traversent la paroi annulaire 34. Une rondelle 58 associée à chaque vis comprimée radialement par la vis radiale associée entre la tôle annulaire 48 et la paroi annulaire 34 pour maintenir un espace prédéfini correspondant au conduit annulaire 46 de passage d'air.

L'invention qui vient d'être décrite fait référence à la partie statorique de la turbine haute pression de la turbomachine 10, qui comporte le carter 30 et les secteurs d'anneau 28.

Il sera compris que l'invention n'est pas limitée au carter 30, et à la turbine haute pression 16, et que l'invention concerne aussi la partie statorique de la turbine basse pression de la turbomachine 10, qui comporte aussi un carter et des secteurs d'anneau similaires.

## Revendications

1. Carter (30) de turbine d'aéronef, destiné à porter un ensemble de secteurs d'anneau (28) qui délimite en partie un conduit de passage d'un flux de gaz au travers la turbine,
le carter (30) comportant des moyens de réglage dynamique de la position radiale des secteurs d'anneau (28) par l'injection contrôlée d'un flux d'air sur des portions (36) d'une paroi annulaire (34) du carter (30),
le carter (30) comportant une patte radiale amont (38) qui relie une extrémité amont de chaque secteur d'anneau (28), selon le sens d'écoulement du flux de gaz, au carter (30), et une patte radiale aval (40) qui relie une extrémité aval de chaque secteur d'anneau (28) au carter (30), et
en ce que au moins la patte radiale amont (38) est réalisée d'une seule pièce avec le carter (30) et est reliée directement à l'extrémité amont de chaque secteur d'anneau (28),
**caractérisé en ce que** le carter (30) comporte un conduit (46) de guidage d'un flux d'air le long d'une face annulaire interne (34i) de la paroi annulaire (34) du carter (30), qui débouche en direction des secteurs d'anneau (28) et qu'au moins la patte radiale amont (38) comporte des orifices (42) de passage d'air de ventilation des secteurs d'anneau (28), qui débouchent dans ledit conduit (46) de guidage.

2. Carter (30) selon la revendication précédente, **caractérisé en ce que** les deux pattes radiales (38, 40) sont réalisées d'une seule pièce avec le carter (30) et sont reliées directement à chaque secteur d'anneau (28).

3. Carter (30) selon l'une quelconque des revendications précédentes, **caractérisé en ce que** chaque patte radiale (38, 40) est en forme d'une couronne s'étendant radialement vers l'intérieur, dans un plan radial par rapport à l'axe principal de la turbine, à partir d'une face annulaire interne (34i) de la paroi annulaire (34) du carter (30).

4. Carter (30) selon l'une quelconque des revendications 1 à 3, **caractérisé en ce que** le conduit (46) est délimité radialement par la paroi annulaire (34) et par une tôle (48) annulaire de guidage qui est agencée radialement entre la paroi annulaire (34) et les secteurs d'anneau (28).

5. Turbine de turbomachine (10) d'aéronef **caractérisé en ce qu'**elle comporte un ensemble statorique composé d'un carter (30) selon l'une quelconque des revendications précédentes, et composé d'une pluralité de secteurs d'anneau (28) qui sont fixés directement au moins à la patte radiale amont (38) du carter (30).

6. Turbomachine d'aéronef comportant une turbine selon la revendication précédente et/ou un carter selon l'une quelconque des revendications 1 à 4.

## Patentansprüche

1. Turbinengehäuse (30) eines Flugzeuges, das zum Tragen einer Einheit von Ringabschnitten (28) ausgeführt ist, die einen Durchgangskanal eines Gasstromes durch die Turbine hindurch teilweise begrenzt,
wobei das Gehäuse (30) Einrichtungen zur dynamischen Regelung der radialen Position der Ringabschnitte (28) durch gesteuertes Einspritzen eines Luftstromes an die Abschnitte (36) einer ringförmigen Wand (34) des Gehäuses aufweist,
wobei das Gehäuse (30) eine stromaufwärts angeordnete radiale Klammer (38), die ein stromaufwärtiges Ende jedes Ringabschnittes (28) in der Fließrichtung des Gasstromes mit dem Gehäuse (30) verbindet, sowie eine stromabwärts angeordnete Klammer (40) aufweist, die ein stromabwärtiges Ende jedes Ringabschnittes (28) mit dem Gehäuse (30) verbindet, und
wobei mindestens die stromaufwärts angeordnete radiale Klammer (38) aus einem Stück mit dem Gehäuse (30) ausgeführt ist und direkt mit dem stromaufwärtigen Ende jedes Ringabschnittes (28) verbunden ist,
**dadurch gekennzeichnet, dass** das Gehäuse (30) einen Kanal (46) zum Leiten eines Luftstromes entlang einer ringförmigen Innenfläche (34i) der ringförmigen Wand (34) des Gehäuses (30) aufweist, der in Richtung der Ringabschnitte (28) mündet, und
dass zumindest die stromaufwärts angeordnete radiale Klammer (38) Luftdurchlassöffnungen (42) zur Belüftung der Ringabschnitte (28) aufweist, die in den besagten Leitungskanal (46) münden.

2. Gehäuse (30) nach dem vorhergehenden Anspruch, **dadurch gekennzeichnet, dass** die zwei radialen Klammern (38, 40) aus einem Stück mit dem Gehäuse (30) ausgeführt sind und direkt mit jedem Ringabschnitt (28) verbunden sind.

3. Gehäuse (3) nach einem der vorhergehenden Ansprüche, **dadurch gekennzeichnet, dass** jede radiale Klammer (38, 40) die Form eines Kranzes aufweist, der sich in einer radialen Ebene bezüglich der Hauptachse der Turbine ausgehend von einer ringförmigen Innenfläche (34i) der ringförmigen Wand (34) des Gehäuses (30) radial nach innen erstreckt.

4. Gehäuse (30) nach einem der vorhergehenden Ansprüche 1 bis 3, **dadurch gekennzeichnet, dass** der Kanal (46) radial durch die ringförmige Wand (34) und durch ein ringförmiges Führungsblech (48) begrenzt ist, das radial zwischen der ringförmigen Wand (34) und den Ringabschnitten (28) angeordnet ist.

5. Turbine des Turbotriebwerks (10) eines Flugzeuges,
**dadurch gekennzeichnet, dass** sie eine Ständereinheit bestehend aus einem Gehäuse (30) nach einem der vorhergehenden Ansprüche sowie bestehend aus einer Mehrzahl von Ringabschnitten (28) aufweist, die unmittelbar zumindest an der radialen, stromaufwärts angeordneten Klammer (38) des Gehäuses (30) befestigt sind.

6. Turbotriebwerk eines Flugzeuges, aufweisend eine Turbine nach dem vorhergehenden Anspruch und/oder ein Turbinengehäuse nach einem der Ansprüche 1 bis 4.

## Claims

1. Aircraft turbine casing (30) designed to carry a set of ring sectors (28) that partly delimits a conduit inside which a gas flow passes through the turbine,
the casing (30) comprising dynamic means of adjusting the radial position of ring sectors (28) by the controlled injection of an air flow on portions (36) of an annular wall (34) of the casing (30),
the casing (30) comprising an upstream radial lug (38) that connects an upstream end of each ring sector (28), along the direction of the gas flow to the casing (30), and a downstream radial lug (40) that connects a downstream end of each ring sector (28) to the casing (30), and
at least the upstream radial lug (38) is made as a single piece with the casing (30) and is directly connected to the upstream end of each ring sector (28),
**characterised in that** the casing (30) comprises an air flow guide conduit (46) along an inner annular face (34i) of the annular wall (34) of the casing (30), that opens up towards the direction of the ring sectors (28)
and **in that** at least the upstream radial lug (38) comprises air passage orifices (42) for ventilation of the ring sectors (28), that open up into said guide conduit (46).

2. Casing (30) according to the previous claim, **characterised in that** the two radial lugs (38, 40) are made as a single piece with the casing (30) and are directly connected to each ring sector (28).

3. Casing (30) according to any one of the previous claims, **characterised in that** each radial lug (38, 40) is formed as a ring extending radially inwards, in a radial plane relative to the principal axis of the turbine, starting from an inner annular face (34i) of the annular wall (34) of the casing (30).

4. Casing (30) according to any one of claims 1 to 3, **characterised in that** the conduit (46) is radially delimited by the annular wall (34) and by an annular guide plate (48) that is arranged radially between the annular wall (34) and the ring sectors (28).

5. Turbine for an aircraft turbine machine (10) **characterised in that** it comprises a stator assembly composed of a casing (30) according to any one of the previous claims, composed of a plurality of ring sectors (28) that are directly fixed at least to the upstream radial lug (38) of the casing (30).

6. Aircraft turbine machine comprising a turbine according to the previous claim and/or a casing according to any one of claims 1 to 4.
